# EUROPÄISCHE PATENTSCHRIFT

(11) **EP 2 904 442 B1**
(45) Veröffentlichungstag und Bekanntmachung des Hinweises auf die Patenterteilung: **07.11.2018**
(21) Anmeldenummer: 13771113.1
(22) Anmeldetag: 27.09.2013
(51) Int. Cl.: G02B 21/00, G02B 6/04

(54) **KONFOKALES MIKROSKOP MIT FREI EINSTELLBARER PROBENABTASTUNG**
CONFOCAL MICROSCOPE WITH FREELY ADJUSTABLE SAMPLE SCANNING
MICROSCOPE À FOYER COMMUN AVEC BALAYAGE D'ÉCHANTILLON LIBREMENT RÉGLABLE

(30) Priorität: 01.10.2012 DE 102012217967
(43) Veröffentlichungstag der Anmeldung: 12.08.2015
(73) Patentinhaber: Carl Zeiss Microscopy GmbH, 07745 Jena (DE)
(72) Erfinder: KALKBRENNER, Thomas, 07745 Jena (DE)
(74) Vertreter: Loritz, Rainer
(86) Internationale Anmeldenummer: PCT/EP2013/070207
(87) Internationale Veröffentlichungsnummer: WO 2014/053415

(56) Entgegenhaltungen:
- JP-A- 2006 071 784
- US-A1- 2001 012 069
- US-A1- 2002 134 921
- US-A1- 2006 072 191
- Chongxiang Li ET AL: "Double detector-arrays 3-D profile inspection system", Novel Optical Systems Design and Optimization V 9 July 2002 Seattle, WA, USA, 9. Juli 2002 (2002-07-09), Seiten 116-123, XP055090401, USA DOI: 10.1117/12.482184 Gefunden im Internet: URL:http://proceedings.spiedigitallibrary. org/data/Conferences/SPIEP/32448/116_1.pdf [gefunden am 2013-11-27]
- HAI-YAN LI ET AL: "<title>Theoretical analysis of multiprobe confocal 3-D detection system</title>", PROCEEDINGS OF SPIE, 30. Januar 2007 (2007-01-30), Seiten 659526-659526-4, XP055090110, ISSN: 0277-786X, DOI: 10.1117/12.726451
- YAN SHI ET AL: "<title>Fast confocal endomicroscopy based on multi-fiber parallel scanning</title>", PROCEEDINGS OF SPIE, Bd. 7845, 3. November 2010 (2010-11-03), Seiten 78451C-78451C-6, XP055090397, ISSN: 0277-786X, DOI: 10.1117/12.870627

## Beschreibung

In der Mikroskopie ist die Konfokalmikroskopie eine gut etablierte Möglichkeit, eine hohe Ortsauflösung mit einer hohen Tiefenschärfe zu kombinieren. Durch die konfokale Abbildung erfolgt eine Selektion der Tiefenebene, die abgebildet wird. Üblicherweise wird die konfokale Mikroskopie als Fluoreszenzmikroskopie realisiert, bei der eine Probe durch Beleuchtungsstrahlung zur Fluoreszenz angeregt wird und die emittierte Fluoreszenzstrahlung konfokal detektiert wird. Da die Beleuchtung der Probe für Fluorophore eine Belastung darstellt und übermäßige Beleuchtung zum Ausbleichen von Fluorophoren führen kann, ist man bestrebt, die Probe nur dort zu beleuchten, wo sie abgebildet wird. Es hat sich deshalb bewährt, die Probe auch konfokal zu beleuchten, so daß letztendlich Probenbereiche, die nicht abgebildet werden, nicht beleuchtet werden.

Die konfokale Abbildung erfolgt im Stand der Technik bekanntermaßen mittels eines sogenannten Pinholes, das als Konfokalitätsfilter dient. Die Probe wird typischerweise durch das Pinhole konfokal in einem Spot beleuchtet und die von diesem Spot ausgehende Fluoreszenzstrahlung wird durch dasselbe Pinhole konfokal auf einen Detektor abgebildet. Die Größe des Spots legt die Ortsauflösung lateral, d.h. quer zur Lichteinfallsrichtung fest, und definiert gleichermaßen auch die Tiefenschärfe. Um eine Probe abzubilden, wird die Lage des konfokal abgebildeten Spots in der Probe verschoben. Hierzu haben sich Scanner bewährt, die den Strahlengang entsprechend ablenken.

Eine besonders schnelle Ablenkung erreicht man mit Schwingspiegelanordnungen, die eine zweiachsige Ablenkung, d.h. die Verschiebung des Spots in einer Ebene, welche senkrecht zur Lichteinfallsrichtung liegt, bewirken. Schwingspiegelanordnungen haben automatisch eine vorgegebene Bahnkurve zur Folge, entlang welcher der Spot verschoben ist. Üblicherweise wird die Probe durch ein rasterförmiges Verschieben des Spots abgetastet.

Damit werden mitunter Probenbereiche beleuchtet, die für die eigentliche Abbildungsaufgabe gar nicht von Interesse sind. Eine Verlängerung der Abbildungsdauer und ein möglicherweise unerwünschtes Bleichen von Fluorophoren ist die Folge. Die Veröffentlichung A. Bullen, "High-Speed, Random-Access Fluorescence Microscopy: I. High-Resolution Optical Recording with Voltage-Sensitive Dyes and Ion Indicators", Biophysical Journal, Vol. 73, Juli 1997, S. 477-491, schildert zur Behebung dieses Nachteils ein konfokales Mikroskop, dessen Scanner eine Strahlablenkung mittels akustooptischen Modulatoren verwendet. Damit ist die Beschränkung auf gerastertes Abtasten aufgehoben, und der beleuchtete und abgebildete Spot kann beispielsweise entlang Strukturen in der Probe verschoben werden, die von besonderem Interesse sind. Diese Vorteile können gemäß dem Stand der Technik aber nur in Kombination mit einem akustooptischen Modulator erreicht werden, der hinsichtlich der optischen Qualität, insbesondere der Transmission nachteilig ist. Bullen et al. können einen solchen Modulator nur in der Sonderform der 2-Photonen-Mikroskopie benutzen, da ansonsten die Lichtverluste bei zweimaligem Durchgang durch den Modulator zu groß wären. Sein Ablenkverhalten variiert zudem mit der Intensität der Strahlung.

JP 2006-071784 A beschreibt ein konfokales Mikroskop, mittels welchem Halbleiterwafer oder LCD-Displays abgebildet werden können. Eine Lichtquellenanordnung hat mehrere Lichtquellen, die gleichzeitig zur Beleuchtung der Probe dienen. Die mehreren Lichtstrahlen werden über eine Pinholeanordnung von einem LCD-Detektor detektiert.

US 2002/134921 A1 offenbart ein konfokales Mikroskop, das eine Lichtquellenanordnung aufweist, deren Licht durch die Probe hindurchgeführt wird und mittels einer Pinholeanordnung und mehreren Detektoren konfokal detektiert wird. Um Crosstalk zwischen den unterschiedlichen Lichtquellen zu vermeiden, werden die Lichtquellen zeitlich moduliert.

Chongxigang Li et al: "Double detector-arrays 3-D profile inspection system" zeigt ein konfokales Mikroskop, bei dem das Pinhole durch eine optische Faser realisiert wird. Eine Laserdiodenanordnung wird in eine Mehrzahl von Lichtleitern eingekoppelt. Das von der Probe gestreute Licht wird wieder über die Lichtleiter auf einen Fotodetektor zur Detektion geführt. Mittels des Detektors wird die Variation der Lichtintensität der Lichtquellenanordnung überwacht.

Der Erfindung liegt deshalb die Aufgabe zugrunde, ein konfokales Mikroskop mit direkt zugreifender Scanmöglichkeit zu schaffen, das diese Nachteile des Standes der Technik überwindet.

Erfindungsgemäß wird die Aufgabe gelöst durch ein Mikroskop gemäß Anspruch 1. Das Mikroskop weist eine Beleuchtungseinrichtung auf, die über eine Lichtquellengruppe aus einzeln einschaltbaren Lichtquellen verfügt. Weiter ist im Mikroskop eine ein Pinholearray umfassende Pinholeeinrichtung vorgesehen, das mehrere, nebeneinanderliegende Pinholeelemente hat, wobei pro Lichtquelle der Lichtquellengruppe ein Pinholeelement vorhanden ist. Eine Optik umfaßt Linsen, die gemeinsam mit Beleuchtungseinrichtung und Pinholearray so angeordnet und ausgebildet sind, daß jedes Pinholeelement mit Strahlung genau einer der Lichtquellen durchstrahlt ist und konfokal in einem im Probenraum liegenden Einzelspot abgebildet wird. Es ist jedem Pinholeelement einer der Einzelspots zugeordnet. Die Einzelspots ruhen und liegen im Probenraum bezogen auf eine Einfallsrichtung der Strahlung nebeneinander. Die Optik weist weiter Elemente auf, welche die Einzelspots durch die Pinholeeinrichtung konfokal auf eine Detektoreinrichtung abbilden. Das Mikroskop weist eine Steuereinrichtung auf, welche das Lichtquellenarray ansteuert und die einzelnen Lichtquellen derart einschaltet, dass das Abtasten der Probe durch den Wechsel zwischen aktiven Einzelspots mittels Ein- und Ausschalten der einzelnen Lichtquellen rein elektronisch erfolgt. Dabei können Linsen der Optik sowohl zur Beleuchtung wirken, also die konfokal im Probenraum liegenden Einzelspots schaffen, als auch die Einzelspots durch die Pinholeelemente konfokal auf die Detektoreinrichtung abbilden. Bei der Abbildung auf die Detektoreinrichtung kann dasselbe Pinholearray wie bei der Beleuchtung zum Einsatz kommen oder ein zweites konjugiert angeordnetes Pinholearray. In letzter Variante umfaßt die Pinholeeinrichtung dann zwei Pinholearrays.
Das Mikroskop hat also, anders als im Stand der Technik, keine externe Scan-Einrichtung, welche für eine Probenabbildung einen Einzelspot im Probenraum verschiebt. Das Abtasten der Probe erfolgt vielmehr durch eine Vielzahl von ruhenden Einzelspots, und der Wechsel zwischen aktiven Einzelspots geschieht durch das Ein- bzw. Ausschalten der einzelnen Lichtquellen. Ist eine einzelne Lichtquelle eingeschaltet, ist der ihr zugeordnete, ruhende Einzelspot beleuchtet, es wird dort Fluoreszenzstrahlung angeregt und auf den Detektor abgebildet. Da die einzelnen Lichtquellen der Lichtquellengruppe frei eingeschaltet werden können, kann somit aus den ruhenden Einzelspots in direktem Zugriff ausgewählt werden. Eine Reihenfolge zum Abrastern der Probe ist nicht mehr vorgegeben, und es gibt keine Bewegung einzelner Spots mehr.
Weist die Detektoreinrichtung einen einzigen Detektor auf, der keine weitere Ortsauflösung hat, wird jeweils immer gerade eine der einzelnen Lichtquellen eingeschaltet. Setzt man einen nicht ortsauflösenden Einzeldetektor ein, erhält man ein besonders gutes Signal/Rausch-Verhältnis und damit eine niedrige Nachweisgrenze für angeregte Fluoreszenzstrahlung.

Mehrere Lichtquellen können gleichzeitig eingeschaltet werden, wenn die Detektoreinrichtung ein Detektorpixelarray aufweist und die Optik zusätzlich jedes Pinholeelement auf ein Detektorpixel oder eine eigene Detektorpixelgruppe abbildet. Eine solche Ausbildungsform erlaubt eine beschleunigte Erfassung der Probe, da an mehreren Stellen gleichzeitig eine Abbildung erfolgen kann.

Die Detektoreinrichtung kann eine Kamera verwenden, bei der jeder Einzelspot auf ein Detektorpixel, also Kamerapixel abgebildet wird. Alternativ sind auch Einzeldetektorarrays möglich. Natürlich sind auch Mischformen denkbar, bei denen n Einzelspots (also mittels Pinholearray und Lichtquellengruppe mit jeweils n Elementen) auf m Detektorelemente eines Detektorarrays abgebildet werden, wobei n ein ganzzahliges Vielfaches von n ist. Beispielsweise kann man 512 x 512 Einzellichtquellen und Pinholeelemente auf 128 x 128 Detektorpixel abbilden. Dann muß beim Aktivieren der Einzellichtquellen nur darauf geachtet werden, daß nicht gleichzeitig zwei Einzellichtquellen eingeschaltet werden, deren Fluoreszenzstrahlung auf dasselbe Detektorpixel gelangt. Auch in dieser Ausführungsform ist dann die Steuereinrichtung geeignet ausgebildet.

Um ein Übersprechen zwischen gleichzeitig beleuchteten Einzelspots zu vermeiden, ist es bevorzugt, in der Lichtquellengruppe Einzellichtquellen einzuschalten, deren Einzelspots nicht unmittelbar benachbart ist. Besonders bevorzugt wird der Abstand zwischen gleichzeitig beleuchteten Einzelspots so gewählt, daß ein Verhältnis zwischen Einzelspotabstand und Einzelspotdurchmesser von 5 : 1 nicht unterschritten wird. Mit anderen Worten, zwischen zwei gleichzeitig beleuchteten Einzelspots liegt bevorzugt immer ein Abstand von mindestens drei unbeleuchteten Einzelspots. Für diese Eigenschaft des Mikroskops ist bevorzugt eine Steuereinrichtung vorgesehen, die ausgebildet ist, die Lichtquellengruppe wie erwähnt anzusteuern und das Detektorpixelarray passend auszulegen.

Von besonderem Vorteil ist es, daß erfindungsgemäß das Abtasten der Probe ohne mechanisch betätigte Teile auskommt. Das Abtasten erfolgt vielmehr rein elektronisch durch geeignetes Einschalten der Einzellichtquellen.

Das Pinholearray ist für die Bildung der Einzelspots mitverantwortlich. Es kann als Lochraster in einer geeigneten Blende ausgebildet werden. Auch kann ein Lichtleitfaserbündel, beispielsweise ein Single-Mode-Faser-Array, eingesetzt werden, wodurch jedes Pinholeelement durch eine Lichtleitfaser des Lichtleitfaserbündels gebildet ist. Damit wirken die einzelnen Lichtleitfasern wie ein konfokales Pinhole für den entsprechenden Einzelspot. Die Ausbildung des Pinholearrays in Form eines Lichtleitfaserbündels ist besonders für endoskopische Anwendungen vorteilhaft, da dann eine hohe Flexibilität in der Strahlführung gegeben ist.

Realisiert man das Pinholearray als Lichtleitfaserbündel, ist es bevorzugt, daß die Optik eine GRIN-Linse aufweist, die auf ein probenraumseitiges Ende des Lichtleitfaserbündels aufgebracht ist und die Strahlung in die Einzelspots bündelt. Diese Ausgestaltung ist insbesondere für endoskopische Anwendungen günstig, da ein robuster, justagefreier und äußerst kompakter Aufbau erreicht ist. Vor allem das letztgenannte Merkmal ist für endoskopische Anwendungen günstig.

Eine lichtleiterbasierte Ausgestaltung kann auch hinsichtlich der Aufteilung von Beleuchtungsstrahlung und Abbildung der Einzelspots angewendet werden. In einer derartigen Weiterbildung der Erfindung wird die Strahlung aus der Lichtquellengruppe direkt in ein Lichtleitfaserbündel so eingekoppelt, daß die Strahlung jeder Einzellichtquelle in eine einzelne Lichtleitfaser gelangt. In diese Lichtleitfaser ist ein Faserkoppler eingearbeitet, der die Strahlung von den Einzelspots direkt auf die Detektoreinrichtung leitet. Diese Lichtleitfasereinrichtung realisiert also nicht nur die Pinholeeinrichtung, sondern auch wesentliche oder gar alle Teile der Optik und eignet sich besonders für eine endoskopische Anwendung. Auch ist es dann optional möglich, die Lichtquellengruppe durch eine Gruppe aus Einzellichtquellen zu realisieren, die jeweils einzeln auf die Einzellichtleitfaser des Lichtleitfaserbündels aufgebracht sind. Dies hat den Vorteil, daß Einzellichtquellen verwendet werden können, deren Baugröße weitgehend frei gewählt werden kann. Gleiches gilt für die Detektoreinrichtung. Das Lichtleitfaserbündel kann optional direkt auf einen nicht-ortsauflösenden Detektor geleitet werden, auf einen ortsauflösenden Detektor geleitet werden, dessen Pixel den einzelnen Lichtleitfasern zugeordnet werden, oder auf eine Einzeldetektorengruppe geleitet werden, wobei jeder Einzeldetektor die Strahlung aus einer oder mehreren Einzellichtleitfaser(n) erhält. Bei letzterer Variante ist die Baugröße der Einzeldetektoren ebenfalls weitgehend frei wählbar.
Die Bildung der Einzelspots im Probenraum kann so erfolgen, daß sich benachbarte Einzelspots in der Probe gerade überlappen. Man erhält dann eine optimale Auflösung beim Abtasten der Probe. Um diese Eigenschaft zu erreichen, ist es bevorzugt, wenn die Optik zusätzlich ein Abbildungselement (z.B. eine Zoomoptik) aufweist, das zwischen Pinholearray und Probenraum angeordnet ist und den Überlapp benachbarter Einzelspots im Probenraum bewirkt.
Zum Abtasten eines Probenraums, der sehr viel ausgedehnter ist, als es die konfokale Abbildung mit dem Pinholearray erlaubt, ist es bevorzugt, dem Pinholearray eine mechanische Bildverschiebungseinrichtung nachzuordnen, die die Lage aller nebeneinanderliegender Einzelspots simultan verstellt. Relativ zueinander ruhen die Einzelspots natürlich weiterhin. Diese mechanische Bildfeldverstellung kann verglichen mit herkömmlichen Scannern sehr viel langsamer sein, da sie nur zur Bildfeldvergrößerung verwendet wird. Diese Erfindung kann optional mit dem Abbildungselement (Zoom-Optik) zusammengefaßt werden.
Die Lichtquellengruppe ist besonders bevorzugt als Lichtquellenarray ausgebildet, indem die Lichtquellen nebeneinander liegen, bevorzugt in einem Rastermaß von 10 bis 20 µm. Es ist dazu günstig, das in der US 7518149 B2 geschilderte Lichtquellenarray zu verwenden, da dieses bereits ein vorkollimiertes Beleuchtungsbündel für jede einzelne Lichtquelle abgibt. Vorteilhaft sind hier außer dem relativ kleinen Abstrahlwinkel durch Vorkollimation auch die geringe Ausdehnung jeder Einzelquelle, was die Fokussierbarkeit gut möglich macht.

Ein solches Lichtquellenarray ist ein Beispiel für ein LED-Array. LED-Beleuchtung hat den Vorteil, daß Schaltfrequenzen von bis zu 100 MHz auch mit Intensitätsmodulation möglich ist.
Die Schaltfrequenz der Einzellichtquellen legt die Scangeschwindigkeit fest.
Die Beleuchtungsstrahlung kann erfindungsgemäß für jeden Einzelspot individuell eingestellt werden. Dies ist für bestimmte Fluoreszenzmikroskopieverfahren, wie FLIM- oder Lock-In-Detektionstechniken von großem Vorteil. So kann man beispielsweise die Einzelspots unterschiedlich modulieren und so benachbarte Bildpunkte durch unterschiedliche Modulationen bzw. Demodulationen trennen.

Eine zusätzliche Weiterbildung der Erfindung liegt darin, daß unterschiedliche Farbkanäle verwendet werden können, wenn die Beleuchtungseinrichtung mehrere, in unterschiedlichen Wellenlängenbereichen emittierende Lichtwellengruppen sowie eine Vereinigereinrichtung aufweist, welche die Strahlung von den Lichtwellengruppen überlagert, so daß die Optik die Pinholeelemente mit spektral einstellbarer Strahlung durchstrahlt.

Die Erfindung hat den Vorteil einer kompakten Bauweise. Es ist kein separates Beleuchtungsmodul für das Mikroskop mehr erforderlich. Auch kann auf mechanische Scanner, die hinsichtlich Robustheit und Justieraufwand problematisch sein können, verzichtet werden. Bewegte Komponenten sind nicht mehr erforderlich.

Dies erlaubt zugleich eine einfache Miniaturisierung des Mikroskops und eröffnet Anwendungen in der Endoskopie, dem Screening von Substanzen vor Ort, miniaturisierte "Labs on Chip" etc.

Der Verzicht auf aufwendige Laser und mechanische Scanner reduziert nicht nur den Herstellaufwand, er beschleunigt zugleich das Meßverfahren, da keine mechanisch bewegten Komponenten mehr betätigt werden müssen.

Aber nicht nur eine Beschleunigung ist mit dem Mikroskop möglich, überraschender Weise kann auch ein beliebig langsames Abtasten der Probe realisiert werden. Auch dies ist mit herkömmlichen Schwingspiegelscannern nicht möglich, deren mechanische Rahmenbedingungen eine Mindestgeschwindigkeit beim Abtasten der Probe vorgeben.

Der freie Zugriff auf die zu beleuchtenden und abzubildenden Einzelspots erlaubt beliebige Abtastschemata der Probe ohne die Bauweisenprobleme, die der Stand der Technik hat.

Verwendet man einen Flächendetektor in der Detektoreinrichtung, kann mit ein und demselben Mikroskop sowohl eine konfokale Abbildung als auch eine Weitfeld-Mikroskopie realisiert werden. Man muß dazu lediglich alle Lichtquellen der Lichtwellengruppe einschalten. Bei einer solchen Weitfeld-Mikroskopie können beliebige Regions of Interest vorgegeben werden, indem die Lichtwellengruppe geeignet angesteuert wird. Für nicht zu beleuchtende Einzelspots werden einfach die entsprechenden Lichtquellen ausgeschaltet.

Die Verwendung von einzeln betätigten Lichtquellen erlaubt eine direkte Leistungsregelung für jeden Einzelspot, sowohl im konfokalen Betrieb als auch im Weitfeld-Betrieb. Durch z.B. den Betriebsstrom (andere Parameter sind möglich, z.B. die Spannung) wird jede Einzellichtquelle bezüglich der Strahlungsintensität eingestellt.
Die gleichzeitige Anregung unterschiedlicher oder gleicher Regions of Interest mit unterschiedlichen Wellenlängen realisiert in einer Weiterbildung der Erfindung die Abtastung der Probe und eine Probenmanipulation in einem. Der Stand der Technik benötigte hierzu immer mehrere Scaneinrichtungen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schemadarstellung eines konfokalen Mikroskops mit frei einstellbarer Probenabtastung,
- Fig. 2: eine Schemadarstellung einer alternativen Ausgestaltung eines Beleuchtungsmoduls für das Mikroskop der Fig. 1,
- Fig. 3: eine Draufsicht auf die Lage von Einzelspots, die das Mikroskop der Fig. 1 in einen Probenraum abbildet bzw. darin abtastet,
- Fig. 4: eine Schemadarstellung zur Verdeutlichung einer mit dem Mikroskop der Fig. 1 möglichen Probenabtastung,
- Fig. 5: eine Schemadarstellung einer abgewandelten Bauweise des Mikroskops der Fig. 1, wobei die Abwandlung ein Pinholearray betrifft,
- Fig. 6: eine Weiterbildung des Mikroskops der Fig. 5,
- Fig. 7: eine Weiterbildung des Mikroskops der Fig. 1 betreffend eine multispektrale Beleuchtung des Probenraums und
- Fig. 8: eine Schemadarstellung einer abgewandelten Bauweise des Mikroskops der Fig. 5.

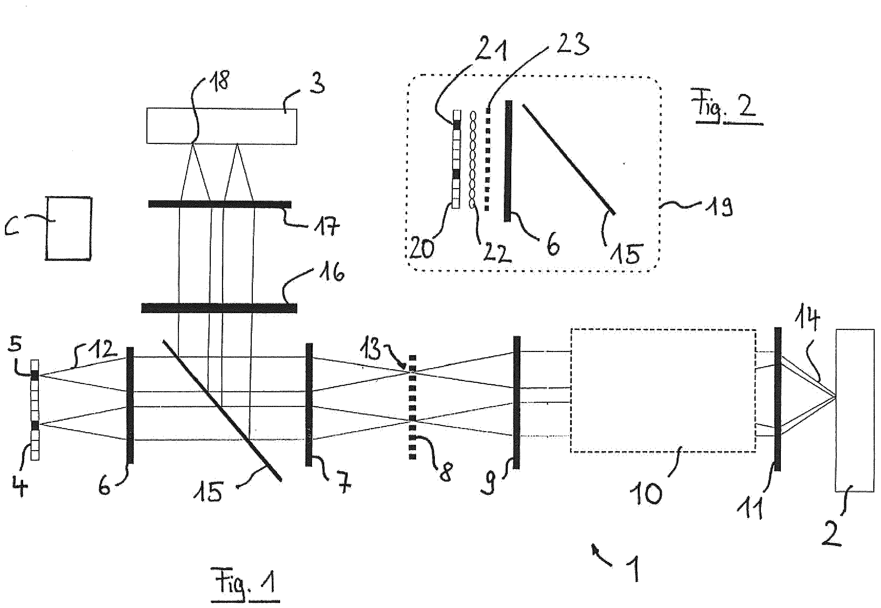

Fig. 1 zeigt schematisch ein Mikroskop 1, das eine in einem Probenraum 2 anzuordnende Probe auf einen Detektor 3 mittels Fluoreszenzmikroskopie abbildet. Als Beleuchtungsquelle für die Fluoreszenzmikroskopie ist ein LED-Array 4 vorgesehen, das einzeln einschaltbare LEDs 5 aufweist. Die Strahlung aus den beleuchteten LEDs 5 wird über Linsen 6 und 7 zu einem Pinholearray 8 geleitet, wobei eine einzelne LED 5 auf ein Pinhole 13 abgebildet ist. Durch die Anordnung des LED-Arrays 4, der Linsen 6 und 7 sowie des Pinholearrays 8 ist jede LED 5 einem Pinhole 13 zugeordnet. Eine dem Pinholearray 8 in Beleuchtungsrichtung nachgeordnete Linse 9 bildet zusammen mit einer Linse 11 das Pinholearray 13 konfokal in Einzelspots 14 im Probenraum 2 ab. Somit wird die Strahlung aus jeder LED 5 konfokal in Einzelspots 14 abgebildet.
Zwischen den Linsen 9 und 11 ist eine optionale Zoom-Optik 10 vorgesehen, welche die Größe und den Abstand der Einzelspots 14 zu verstellen und damit einen Überlapp zwischen benachbarten Einzelspots 14 einzustellen erlaubt. Sie realisiert optional zudem eine einstellbare Bildverschiebung, um ein größeres Bildfeld erfassen zu können.
Aus dem Probenraum 2 stammende Fluoreszenzstrahlung wird aus den Einzelspots 14 gesammelt und über die Linsen 11, 9, das Pinholearray 8 sowie die Linse 7 zu einem bevorzugt dichroitischen Strahlteiler 15 geleitet, der die Fluoreszenzstrahlung aus dem Beleuchtungsstrahlengang auskoppelt und über einen Filter 16, welcher eventuelle Beleuchtungsstrahlungsreflexe unterdrückt und eine Linse 17 auf den Detektor 3 abgebildet. Dabei ist jeder Spot 14 im Probenraum 2 auf einen Spot 18 am Detektor 3 abgebildet. Der Detektor 3 weist (nicht weiter eingezeichnete) Detektorpixel auf. In der in Fig. 1 dargestellten Ausführungsform ist jedes Detektorpixel einem Spot 18 zugeordnet.

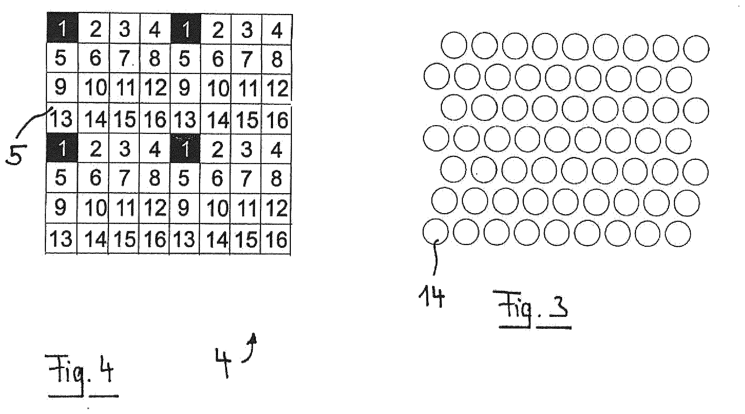

Eine mögliche Anordnung der Einzelspots 14 im Probenraum 2 zeigt schematisch Fig. 3. Wie zu sehen ist, liegt eine Vielzahl von Einzelspots 14 nebeneinander. Ihre Lage und Zahl entspricht denen der Pinholes 13 und der LED 5. Welcher Einzelspot beleuchtet ist, hängt ausschließlich von der Betätigung des LED-Arrays 4 ab, d.h. davon, welche der einzelnen LED 5 eingeschaltet ist.

Die Bauweise der Fig. 1 verwendet ein LED-Array gemäß der bereits zitierten US 7518159 B2.
Anstelle einer Bauweise mit einem solchen LED-Array kann auch das in Fig. 2 schematisch dargestellte Modul 19 zum Einsatz kommen, bei dem das LED-Array 4 durch ein Lichtquellenarray 20 mit Einzellichtquellen 21 ersetzt ist, die anders als die LED 5 keine gebündelte Strahlung abgeben. Da somit keine Abstrahlcharakteristik in einem engen Öffnungswinkel vorliegen (die LED 5 des LED-Arrays 4 strahlt Strahlen in einem Öffnungswinkel von 25 bis 30° ab), ist dem Lichtquellenarray 20 ein Minilinsenarray 22 nachgeordnet, das zusammen mit einem Blendenarray 23 die Strahlung der Einzellichtquellen 21 derart bündelt, daß anschließend die Linse 6 und die weitere Optik die Abbildung durch das Pinholearray 8 in die Einzelspots 14 bewirkt. Auch hier ist jeder Einzelspot 14 genau einer Lichtquelle, in diesem Fall einer Einzellichtquelle 21, zugeordnet und nur dann beleuchtet, wenn die entsprechende Einzellichtquelle 21 leuchtet.
Fig. 4 zeigt exemplarisch einen möglichen parallelen Scanverlauf, der am Mikroskop 1 unter Steuerung eines Steuergerätes C, das mit dem Detektor 3 und dem LED-Array 4 geeignet vorbunden ist, eingestellt wird. Fig. 4 zeigt eine Draufsicht auf das LED-Array 4 mit den einzelnen LED 5. Die in der Figur im LED-Array 4 eingetragenen Zahlen zeigen die Reihenfolge, mit der die LED 5 eingeschaltet werden. Im Zustand der Fig. 1 leuchten alle LED, für die die Zahl "1" eingetragen ist, gleichzeitig. Im nächsten Abtastschritt werden nur die LED eingeschaltet, die mit der Zahl "2" versehen sind, usw. Natürlich sind auch andere Reihenfolgen denkbar, sowohl was die Anzahl an gleichzeitig leuchtenden LEDs im LED-Array 4 als auch was die Anzahl an LEDs im LED-Array 4 betrifft. Hinsichtlich des vorteilhaften Abstandes gleichzeitig beleuchtender Spots wird auf den vorstehenden allgemeinen Teil der Beschreibung verwiesen.

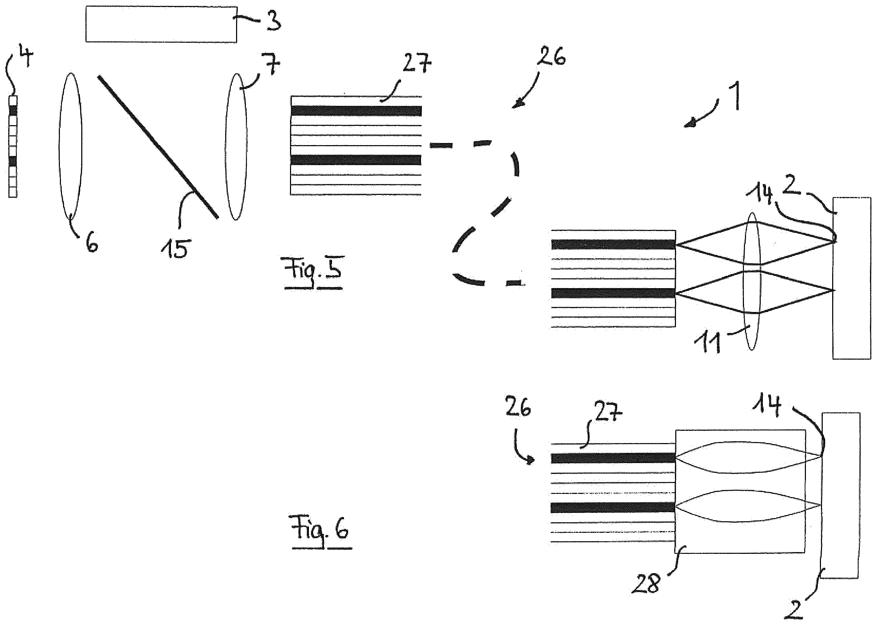

Fig. 5 zeigt eine Abwandlung des Mikroskops 1 der Fig. 1, bei dem das Pinholearray 8 durch ein Lichtleitfaserbündel 26 realisiert ist. Ein einzelnes Pinhole ist in dieser Bauweise durch eine Einzelfaser 27 verwirklicht. Diese Bauweise ist besonders für die Anwendung des Mikroskops in einem Endoskop etc. vorteilhaft. Als Abwandlung dieser Bauweise kann, wie in Fig. 6 angedeutet, eine GRIN-Linse 28 auf ein probenseitiges Ende des Lichtleitfaserbündels 26 aufgebracht werden, welche die Linse 11 ersetzt. Ansonsten entspricht die Bauweise der Fig. 5 oder 6 im wesentlichen der Bauweise der Fig. 1.

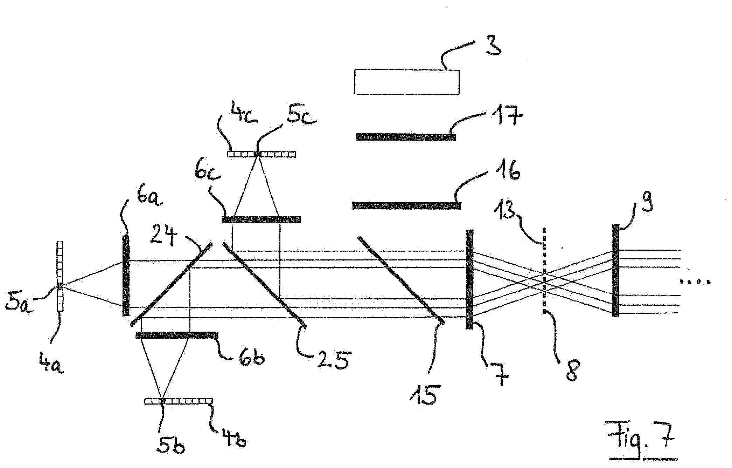

Fig. 7 zeigt eine Weiterbildung des Mikroskops der Fig. 1 oder 5/6 betreffend die Beleuchtungseinrichtung. Anstelle eines einzigen LED-Arrays 4 sind nun mehrere LED-Arrays vorgesehen, im Beispiel der Fig. 7 drei LED-Arrays 4a, 4b und 4c. Sie unterscheiden sich hinsichtlich der spektralen Zusammensetzung der abgegebenen Strahlung. Entsprechende Linsen 6a, 6b, 6c sowie Strahlvereiniger 24 und 25 überlagern die Strahlung aus den drei LED-Arrays 4a, 4b, 4c, so daß eine multispektrale Beleuchtung des Probenraums 2 erfolgt. Die drei LED-Arrays sind dabei so zueinander justiert, daß jede Einzel-LED 5a, 5b, 5c wiederum genau einem Pinhole 13 zugeordnet ist. Alternativ kann auch ein LED-Array 4 verwendet werden, dessen spektrale Zusammensetzung der von jedem LED 5 abgegebenen Strahlung durch eine Steuergröße (z.B. Steuerspannung) einstellbar ist.

Die Anzahl von drei spektral unterschiedlichen LED-Arrays ist natürlich rein exemplarisch. Es können auch weniger, d.h. zwei Arrays oder mehr verwendet werden, je nach gewünschter spektraler Zusammensetzung der Beleuchtungsstrahlung.

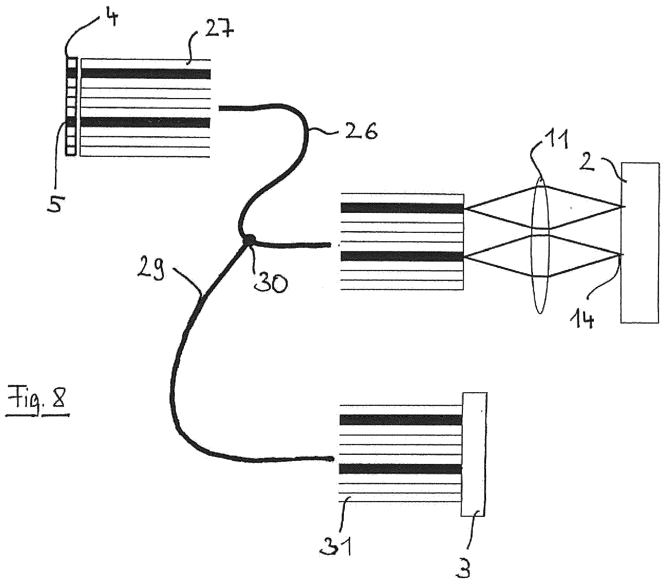

Fig. 8 zeigt eine Abwandlung des Mikroskops der Fig. 5, bei dem das Lichtquellenarray 4 die Strahlung direkt in das Lichtleitfaserbündel 26 einkoppelt. Das Lichtleitfaserbündel 26 ist mit einer Auskoppelstelle 31 versehen, an der ein Lichtleitfaserbündel 29 angekoppelt ist, das Einzellichtfasern 31 aufweist, welche zum Detektor 3 führen. Die Koppelstelle 30 ist so ausgebildet, daß jede Einzellichtfaser 27 mit genau einer Einzellichtfaser 31 verbunden ist. Diese Bauweise ist sehr kompakt, hat allerdings den Nachteil, daß keine spektrale Unterscheidung zwischen der Beleuchtung der Einzelspots 14 und der Abbildung der Einzelspots 14 möglich ist. Eine dichroitische Ausgestaltung, wie sie beim Strahlteiler 15 bevorzugt vorgenommen wird, kann an der Koppelstelle 30 in der Regel nicht realisiert werden. Die Ausgestaltung der Fig. 8 ist deshalb besonders bevorzugt für Anwendungen, bei denen das Signal/Rausch-Verhältnis aufgenommener Fluoreszenzstrahlung unkritisch ist oder bei der in den Spots 14 keine Fluoreszenzstrahlung sondern Rückstreuung, d.h. Strahlung der im wesentlichen gleichen Wellenlängenzusammensetzung wie die Beleuchtungsstrahlung, aufgenommen wird.

## Patentansprüche

1. Mikroskop zur konfokalen Abbildung einer in einem Probenraum (2) angeordneten Probe, das aufweist
- eine Beleuchtungseinrichtung, die eine Lichtquellengruppe (4; 20) aus einer Vielzahl von einzeln einschaltbaren Lichtquellen (5; 21) aufweist,
- eine Detektoreinrichtung (3),
- Pinholeeinrichtung, die ein Pinholearray (8; 26) umfaßt, das mehrere nebeneinander liegende Pinholeelement (13; 27) hat, wobei pro Lichtquelle (5; 21) ein Pinholeelement (13; 27) vorhanden ist, und
- eine Optik (6, 7, 9, 11), die jedes Pinholeelement (13; 27) mit Strahlung einer einzelnen der Lichtquellen (5; 21) der Lichtquellengruppe (4; 20) durchstrahlt und dadurch konfokal einen im Probenraum (2) liegenden Einzelspot (14) beleuchtet,
- wobei jedem Pinholeelement (13; 27) einer der Einzelspots (14) zugeordnet ist und
- die Optik (11, 9, 7, 15, 17) die Einzelspots (14) durch die Pinholeeinrichtung konfokal auf die Detektoreinrichtung (3) abbildet, wobei
- die Einzelspots (14) im Probenraum (2) bezogen auf eine Einfallsrichtung der Strahlung ruhend nebeneinander liegen, und
- das Mikroskop eine Steuereinrichtung (C) aufweist, welche dazu konfiguriert ist, das Lichtquellenarray (4) anzusteuern, **dadurch gekennzeichnet, dass**
die Steuereinrichtung dazu konfiguriert ist, einzelne Lichtquellen (5) der Vielzahl von Lichtquellen (5; 21) derart ein- und auszuschalten, dass ein Abtasten der Probe durch einen Wechsel zwischen Einzelspots (14) mit aktivierter Lichtquelle (5) ohne Bewegung der Einzelspots (14) erfolgt,
- wodurch die Probe rasterfrei und ohne Bewegung der Einzelspots abgetastet wird.

2. Mikroskop nach Anspruch 1, wobei die Detektoreinrichtung (3) ein Detektorpixelarray aufweist und die Optik (7, 15, 17) jedes Pinholeelement (13) auf ein Detektorpixel abbildet.

3. Mikroskop nach einem der obigen Ansprüche, wobei das Pinholearray als Lichtleitfaserbündel (26) ausgebildet ist und jedes Pinholeelement durch eine Lichtleitfaser (27) des Lichtleitfaserbündels (26) gebildet ist.

4. Mikroskop nach Anspruch 3, wobei die Optik eine GRIN-Linse (28) aufweist, die auf ein probenraumseitiges Ende des Lichtleitfaserbündels (26) aufgebracht ist und die Strahlung in die Einzelspots (14) bündelt.

5. Mikroskop nach einem der obigen Ansprüche, wobei die Optik ein Abbildungselement (10) aufweist, das zwischen dem Pinholearray (8) und dem Probenraum (2) angeordnet ist und einen Überlapp benachbarter Einzelspots (14) im Probenraum (2) bewirkt.

6. Mikroskop nach einem der obigen Ansprüche, wobei eine Bildfeldverschiebeeinrichtung (10) vorgesehen ist, die die Lage aller nebeneinander liegender Einzelspots (14) simultan im Probenraum (2) verschiebt.

7. Mikroskop nach einem der obigen Ansprüche, wobei die Lichtquellengruppe als ein Lichtquellenarray (4) ausgebildet ist, in dem die Lichtquellen (5) nebeneinander liegen, bevorzugt in einem Rastermaß von 10 bis 20 µm.

8. Mikroskop nach Anspruch 7, wobei das Lichtquellenarray ein LED-Array (4) ist.

9. Mikroskop nach einem der obigen Ansprüche, wobei die Steuereinrichtung (C) mehrere, nicht direkt benachbarte Einzelspots (14) beleuchtende Lichtquellen (5) gleichzeitig einschaltet.

10. Mikroskop nach einem der obigen Ansprüche, wobei die Beleuchtungseinrichtung mehrere, in unterschiedlichen Wellenlängenbereichen emittierende Lichtquellengruppen (4a, 4b, 4c) und eine Vereinigereinrichtung (24, 25) aufweist, welche die Strahlung von den Lichtquellengruppen (4a, 4b, 4c) überlagert.

## Claims

1. Microscope for confocal imaging of a specimen arranged in a specimen space (2), said microscope having
- an illumination device, which has a light-source group (4; 20) made of a multiplicity of individually activatable light sources (5; 21),
- a detector device (3),
- a pinhole device comprising a pinhole array (8; 26) that has a plurality of pinhole elements (13; 27) lying next to one another, wherein one pinhole element (13; 27) is present per light source (5; 21), and
- an optical unit (6, 7, 9, 11) which passes radiation of a single one of the light sources (5; 21) of the light-source group (4; 20) through each pinhole element (13; 27) and thereby illuminates in confocal fashion an individual spot (14) lying in the specimen space (2),
- wherein one of the individual spots (14) is assigned to each pinhole element (13; 27) and
- the optical unit (11, 9, 7, 15, 17) images the individual spots (14) in confocal fashion onto the detector device (3) through the pinhole device, wherein
- the individual spots (14) lie resting next to one another in the specimen space (2) in relation to a direction of incidence of the radiation and
- the microscope has a control device (C) which is configured to actuate the light-source array (4), **characterized in that**
- the control device is configured to activate and deactivate individual light sources (5) of the multiplicity of light sources (5; 21) in such a way that the specimen is scanned by alternating between individual spots (14) with an activated light source (5) without moving the individual spots (14),
- as a result of which the specimen is scanned in a grid-free fashion and without moving the individual spots.

2. Microscope according to Claim 1, wherein the detector device (3) has a detector pixel array and the optical unit (7, 15, 17) images each pinhole element (13) onto a detector pixel.

3. Microscope according to any one of the preceding claims, wherein the pinhole array is embodied as an optical fibre bundle (26) and each pinhole element is formed by an optical fibre (27) of the optical fibre bundle (26).

4. Microscope according to Claim 3, wherein the optical unit has a GRIN lens (28), which is applied to a specimen-space-side end of the optical fibre bundle (26) and which focuses the radiation into the individual spots (14).

5. Microscope according to any one of the preceding claims, wherein the optical unit has an imaging element (10), which is arranged between the pinhole array (8) and the specimen space (2) and which causes an overlap of adjacent individual spots (14) in the specimen space (2).

6. Microscope according to any one of the preceding claims, wherein an image field displacement device (10) is provided, the latter, in the specimen space (2), simultaneously displacing the position of all individual spots (14) lying next to one another.

7. Microscope according to any one of the preceding claims, wherein the light-source group is embodied as a light-source array (4), in which the light sources (5) lie next to one another, preferably with a grid dimension of 10 to 20 µm.

8. Microscope according to Claim 7, wherein the light-source array is an LED array (4).

9. Microscope according to any one of the preceding claims, wherein the control device (C) simultaneously activates a plurality of light sources (5) that do not illuminate directly adjacent individual spots (14).

10. Microscope according to any one of the preceding claims, wherein the illumination device has a plurality of light-source groups (4a, 4b, 4c) that emit in different wavelength ranges and a unification device (24, 25), which overlays the radiation from the light-source groups (4a, 4b, 4c).

## Revendications

1. Microscope pour la formation d'image confocale d'un échantillon disposé dans une chambre à échantillon (2), comportant
- un dispositif d'éclairage doté d'un groupe de sources de lumière (4 ; 20) composé d'une pluralité de sources de lumière pouvant être activées séparément (5 ; 21),
- un dispositif de détection (3),
- un dispositif à trous d'épingle comprenant un réseau de trous d'épingle (8 ; 26) doté d'une pluralité d'éléments de trous d'épingle adjacents (13 ; 27), dans lequel il est prévu un élément de trou d'épingle (13 ; 27) par source de lumière (5 ; 21), et
- une optique (6, 7, 9, 11) qui émet un rayonnement d'une seule des sources de lumière (5 ; 21) du groupe de sources de lumière (4 ; 20) à travers chaque élément de trou d'épingle (13 ; 27) et éclaire ainsi de manière confocale un point lumineux individuel (14) situé dans la chambre à échantillon (2),
- dans lequel chaque élément de trou d'épingle (13 ; 27) est associé à l'un des points lumineux individuels (14) et
- l'optique (11, 9, 7, 15, 17) forme une image confocale des points lumineux individuels (14) sur le dispositif de détection (3) à travers dispositif à trous d'épingle, dans lequel
- les points lumineux individuels (14) sont adjacents les uns aux autres dans la chambre à échantillon (2) par rapport à une direction d'incidence du rayonnement, et
- le microscope comporte un dispositif de commande (C) qui est configuré pour commander le réseau de sources de lumière (4),
**caractérisé en ce que** le dispositif de commande est configuré pour activer et désactiver des sources de lumière individuelles (5) de la pluralité de sources de lumière (5 ; 21) de manière à ce qu'un balayage de l'échantillon soit effectué par basculement entre des points lumineux individuels (14) au moyen d'une source de lumière activée (5) sans déplacer les points lumineux individuels (14),
- de sorte que l'échantillon est balayé sans trame et sans déplacer les différents points.

2. Microscope selon la revendication 1, dans lequel le dispositif de détection (3) comprend un réseau de pixels de détection et l'optique (7, 15, 17) forme l'image de chaque élément de trou d'épingle (13) sur un pixel de détection.

3. Microscope selon l'une des revendications précédentes, dans lequel le réseau de trous d'épingle est réalisé sous la forme d'un faisceau de fibres optiques (26) et chaque élément de trou d'épingle est formé par une fibre optique (27) du faisceau de fibres optiques (26) .

4. Microscope selon la revendication 3, dans lequel l'optique comprend une lentille GRIN (28) montée sur une extrémité du faisceau de fibres optiques (26) du côté de la chambre à échantillon et met le rayonnement sous forme de faisceau dans les points lumineux individuels (14).

5. Microscope selon l'une des revendications précédentes, dans lequel l'optique comporte un élément de formation d'image (10) disposé entre le réseau de trous d'épingle (8) et la chambre à échantillon (2) et provoquant un chevauchement de points lumineux individuels adjacents (14) dans la chambre à échantillon (2) .

6. Microscope selon l'une des revendications précédentes,
dans lequel il est prévu un dispositif de décalage de champ d'image (10) qui déplace simultanément la position de tous les points lumineux individuels adjacents (14) dans la chambre à échantillon (2).

7. Microscope selon l'une des revendications précédentes, dans lequel le groupe de sources de lumière est réalisé sous la forme d'un réseau de sources de lumière (4) dans lequel les sources de lumière (5) se trouvent côte à côte, de préférence selon une dimension de maillage de 10 à 20 µm.

8. Microscope selon la revendication 7, dans lequel le réseau de sources de lumière est un réseau de LED (4).

9. Microscope selon l'une des revendications précédentes, dans lequel le dispositif de commande (C) active simultanément plusieurs sources de lumière (5) éclairant des points lumineux individuels (14) qui ne sont pas directement adjacents.

10. Microscope selon l'une des revendications précédentes, dans lequel le dispositif d'éclairage comprend plusieurs groupes de sources de lumière (4a, 4b, 4c) émettant dans des plages de longueurs d'onde différentes et un dispositif de combinaison (24, 25) qui superpose le rayonnement des groupes de sources de lumière (4a, 4b, 4c).
